# EUROPÄISCHE PATENTSCHRIFT

(11) **EP 3 889 484 B1**
(45) Veröffentlichungstag und Bekanntmachung des Hinweises auf die Patenterteilung: **08.01.2025**
(21) Anmeldenummer: 21000092.3
(22) Anmeldetag: 29.03.2021
(51) Int. Cl.: F16L 11/11, F16L 11/15, F16L 35/00, F16L 25/00, F16L 47/00, B29C 48/13, B29C 48/09, B29C 48/30

(54) **FLUIDISCHE EINHEIT UND VERFAHREN ZUM HERSTELLEN EINER FLUIDISCHEN EINHEIT**
FLUIDIC UNIT AND METHOD FOR MANUFACTURING A FLUIDIC UNIT
UNITÉ FLUIDIQUE ET PROCÉDÉ DE FABRICATION D'UNE UNITÉ FLUIDIQUE

(30) Priorität: 30.03.2020 DE 102020001987
(43) Veröffentlichungstag der Anmeldung: 06.10.2021
(73) Patentinhaber: Voss Automotive GmbH, 51688 Wipperfürth (DE)
(72) Erfinder: KOLBERG, Ralf, 50733 Köln (DE); GMEINER, Swen, 51709 Marienheide (DE); KLEIN, Roland, 51688 Wipperfürth (DE)
(74) Vertreter: Rebbereh, Cornelia

(56) Entgegenhaltungen:
- EP-A1- 2 431 515
- EP-A2- 1 286 099
- WO-A1-2018/162441
- US-A- 4 480 855
- US-A- 4 758 023

## Beschreibung

Steckverbinder und zumindest ein Wellrohr, sowie ein Verfahren zum Herstellen einer solchen fluidischen Einheit. Sowohl Wellrohre als auch Steckverbinder zum Verbinden zumindest zweier Komponenten, wie beispielsweise zweier Medienleitungen oder einer Medienleitung mit einem Aggregat, sind im Stand der Technik in unterschiedlichsten Ausführungsvarianten bekannt. Ein Steckverbinder wird z.B. als Spritzgussbauteil gefertigt. Er kann sowohl als Steckerteil als auch als Muffenteil ausgebildet sein. Ein endseitig an einer Medienleitung oder einem Aggregat angeordneter Steckerteil wird dabei z.B. in ein endseitig an einer anderen Medienleitung oder einem Aggregat angeordnetes Muffenteil eingesteckt. Um den Steckerteil im Muffenteil zu sichern, ist es ebenfalls bekannt, zumindest ein Halteelement vorzusehen. Halteelemente sind ebenfalls in unterschiedlichsten Ausgestaltungen bekannt, beispielsweise aus der WO 2018/019421 A1. Zum Anordnen des Halteelements weist der Steckverbinder, insbesondere in Form eines Steckerteils, zumindest einen Aufnahmeabschnitt auf. Das dort aufgefügte Halteelement dient zum lösbaren Halten des Steckerteils in dem Muffenteil. Hierzu ist es ferner bekannt, das Halteelement in zumindest einem Abschnitt radial aufweitbar auszubilden, wobei zumindest ein Haltarm des Halteelements mit zumindest einer außenseitig auskragenden Rastnase versehen ist, der zumindest eine Haltearm ein freies Ende und ein am Halteelementkörper festes Ende aufweist und in radialer Richtung bezüglich des Steckerteils federelastisch bewegbar ist zum Verrasten der zumindest einen Rastnase an zumindest einer Verrastungsfläche oder einer Verrastungsöffnung des Muffenteils und zum Lösen von dieser.

Aus der EP 2431515 A1 ist ein Ablaufschlauch für ein wassergespeistes Haushaltsgerät bekannt. Der Ablaufschlauch, der als Wellschlauch ausgebildet ist, wird im Blasverfahren hergestellt. Bei diesem Fertigungsverfahren besteht die Möglichkeit, den Anschlussbereich mit zwei umlaufenden Nuten auszustatten, die einen O-Ring zur Abdichtung und eine Sicherungsscheibe zur Befestigung aufnehmen können.

Die klammerartig ausgebildete Sicherungsscheibe greift im gesteckten Zustand des als Anschlusshülse ausgebildeten Anschlussbereichs mit ihren innen liegenden Schenkelbereichen in eine der an der Anschlusshülse angeordneten umlaufenden Nuten ein.

Wellrohre dienen beispielsweise als äußere Umhüllung zur thermischen Isolierung einer schlauch- oder rohrförmigen Medienleitung, wobei die Luft im Abstandsraum zwischen der Außenseite der Medienleitung und der Innenseite des Wellrohres der thermischen Isolierung des durch die Medienleitung strömenden Mediums, wie eines Fluids, dient. Ein solches Wellrohr kann z.B. an eine außenseitige Isolierumhüllung eines Steckverbinders angebracht werden, beispielweise durch eine form- oder stoffschlüssige Verbindung. Ebenfalls ist es bekannt, ein solches Wellrohr beispielsweise über eine Dornverbindung oder eine Schweißverbindung direkt mit einem Steckverbinder zu verbinden Nach dem Verbinden von Steckverbinder und Wellrohr entsteht eine fluidische Einheit. Die fluidische Einheit aus Wellrohr und damit verbundenem Steckverbinder, insbesondere in Form eines Steckerteils, kann beispielsweise an ein Aggregat, wie Batteriekühlplatten einer Fahrzeugbatterie, insbesondere an deren Ein- oder Auslaufstutzen durch Aufstecken befestigt werden.

Als nachteilig erweist es sich, dass bei der erzeugten fluidischen Einheit zwischen dem Steckverbinder und dem Wellrohr und/oder einer von diesem umgebenen Medienleitung eine Schnitt- bzw. Verbindungsstelle, nämlich in Form einer Dornverbindung oder einer Schweißverbindung, vorgesehen ist, da diese die hohen Anforderungen im Automotivebereich erfüllen muss. Ferner sind die Kosten für die Herstellung von Spritzgussbauteilen in Form von Steckverbindern und deren Montage an einem jeweiligen Wellrohr bzw. einer jeweiligen Medienleitung vergleichsweise hoch. Gerade an Modulen zur Batteriekühlung einer Fahrzeugbatterie befinden sich zahlreiche Zu- und Abläufe, so dass auch die Anzahl an Steckverbindern, die dort befestigt werden, vergleichsweise hoch ist und somit die entsprechenden Kosten. Alle Schnittstellen zwischen Steckverbinder und Medienleitung bzw. einem diese umgebenden Wellrohr müssen aufgrund der auftretenden Drücke den hohen Qualitätsanforderungen entsprechen.

Der vorliegenden Erfindung liegt daher die Aufgabe zugrunde, eine fluidische Einheit, umfassend zumindest ein Wellrohr und zumindest einen Steckverbinder, sowie ein Verfahren zum Herstellen einer solchen fluidischen Einheit zu schaffen, bei der bzw. dem die Anzahl an Schnittstellen zwischen Steckverbinder und Wellrohr deutlich vermindert wird, somit die Herstellungskosten verringert und dennoch eine hohe Qualität der erzeugten fluidischen Einheit sichergestellt werden kann.

Die Aufgabe wird durch eine fluidische Einheit nach Anspruch 1 gelöst, wobei der zumindest eine Steckverbinderprofilabschnitt ein Steckerteilprofilabschnitt ist und zumindest einen Aufnahmeabschnitt zum Anordnen eines Halteelements und zumindest einen Nutabschnitt zum Anordnen eines Dichtelements aufweist, und benachbart zu dem Aufnahmeabschnitt ein Übergangsabschnitt vorgesehen ist, an den sich der Wellrohrprofilabschnitt anschließt, wobei Wellrohr und Steckverbinder in Form des Steckerteilprofilabschnitts einteilig durch Extrudieren in einer Extrusionsvorrichtung ausgebildet sind, ein Halteelement und ein Dichtring auf den oder die endseitig am jeweiligen Wellrohrprofilabschnitt angeordneten Steckerteilprofilabschnitt(e) aufgefügt sind, der Steckerteilprofilabschnitt einen endseitigen Abschnitt mit einem Außendurchmesser, einen sich daran anschließenden, gegenüber dem endseitigen Abschnitt leicht auskragenden Wulstabschnitt mit einem Außendurchmesser und im Anschluss an diesen den Nutabschnitt aufweist, dessen Außendurchmesser deutlich geringer als der Außendurchmesser des Wulstabschnitts und der Außendurchmesser des endseitigen Abschnitts ist, benachbart zu dem Nutabschnitt der Steckerteilprofilabschnitt einen Abschnitt aufweist, der einen Außendurchmesser aufweist, der etwa dem Außendurchmesser des Wulstabschnitts entspricht, der Aufnahmeabschnitt zum Anordnen des Halteelements einen gegenüber seinen beidseitig benachbarten Abschnitten reduzierten Außendurchmesser aufweist, so dass Haltearme des Halteelements dort eingreifen und sich in dem Aufnahmeabschnitt abstützen können, wobei der Außendurchmesser des Aufnahmeabschnitts etwa dem Außendurchmesser des Nutabschnitts entspricht, und sich das Haltelement endseitig einerseits auf dem dem Aufnahmeabschnitt benachbarten Abschnitt, andererseits auf dem dem Aufnahmeabschnitt benachbarten Übergangsabschnitt des Steckerteilprofilabschnitts abstützt. Für ein Verfahren nach Anspruch 8 zum Herstellen einer solchen fluidischen Einheit wird die Aufgabe dadurch gelöst, dass ein Endlosrohr durch Extrudieren geformt wird, das Abschnitte mit Wellrohrprofil und zumindest einen Abschnitt mit zwei spiegelbildlich zueinander ausgebildeten Steckverbinderprofilabschnitten aufweist, dass das Endlosrohr entformt wird, und dass das Endlosrohr im Bereich des zumindest einen Abschnitts mit den beiden spiegelbildlich zueinander ausgebildeten Steckverbinderprofilabschnitten zwischen diesen in zumindest zwei fluidische Einheiten mit jeweils zumindest einem Wellrohrprofilabschnitt und zumindest einem endseitig einteilig daran angeformten Steckverbinderprofilabschnitt getrennt wird.

Weiterbildungen der Erfindung sind in den abhängigen Ansprüchen definiert. Dadurch wird eine fluidische Einheit geschaffen, die zumindest einen mit einem Wellrohr einteiligen Steckverbinder, somit eine einteilige Einheit aus beiden, umfasst, so dass die Schnittstelle zwischen Steckverbinder und Wellrohr hierdurch entfällt. Durch das einteilige Ausbilden von Wellrohr und Steckverbinder entfallen die Kosten für das separate Ausbilden von Wellrohr und Steckverbinder einerseits und andererseits die Kosten für das Verbinden der beiden miteinander. Nachdem keine stoffschlüssige oder formschlüssige Verbindung zwischen Wellrohr und Steckverbinder mehr vorzusehen ist, sondern beide einteilig ausgebildet sind, können auch die hohen Qualitätsanforderungen, die insbesondere im Automotivebereich herrschen, problemlos erfüllt werden. Aufgrund des einteiligen Ausbildens von Steckverbinder und Wellrohr bzw. Wellrohr und Steckverbinder entsteht die fluidische Einheit, die zumindest einen Wellrohrprofilabschnitt anstelle eines separaten Wellrohres und zumindest einen Steckverbindungsprofilabschnitt anstelle eines separaten Steckverbinders umfasst.

Der Steckverbinderprofilabschnitt ist als Steckerteilprofilabschnitt ausgebildet, um in einen Muffenteil als Gegenstück z.B. an einer anderen

Medienleistung einer anderen fluidischen Einheit oder einem Aggregat durch Steckverbinden angeschlossen werden zu können. Das einteilige Ausbilden von Wellrohr und Steckverbinder, in Form eines Steckerteilprofilabschnitts, erfolgt durch Extrudieren in einer Extrusionsvorrichtung. Eine solche Extrusionsvorrichtung zur Durchführung des Verfahrens ist vorteilhaft als Corrugator ausgebildet und weist in Axialrichtung der Extrusionsvorrichtung zumindest zwei Profileinsätze zum Ausbilden zumindest zweier Wellenprofilabschnitte und zumindest einen Backeneinsatz mit einer zwei spiegelbildlich zueinander angeordneten Steckverbinderprofilabschnitten entsprechenden Innenprofilierung auf. Der zumindest eine Backeneinsatz ist in Axialrichtung zwischen den zumindest zwei Profileinsätzen zum Ausbilden der zumindest zwei Wellenprofilabschnitte anordbar oder angeordnet. Der zumindest eine Backeneinsatz und die Profileinsätze sind jeweils zumindest zweiteilig und die jeweiligen zumindest zwei Teile zum Entformen eines extrudierten Endlosrohres in Radialrichtung voneinander trennbar ausgebildet. Bei einer als Corrugator ausgebildeten Extrusionsvorrichtung wird über Saugformen, also mittels Unterdrucks, das extrudierte Kunststoffmaterial an die Innenprofilierung der Profileinsätze angezogen, ebenso im Bereich der Backeneinsätze an deren Innenprofilierung. Das Kunststoffmaterial legt sich hierdurch an die jeweilige Innenprofilierung der Profileinsätze und Backeneinsätze an, so dass sich die gewünschte äußere Formgebung von Wellrohr und Steckverbinderprofilabschnitten ergibt. Die Extrusionsvorrichtung umfasst somit Profileinsätze zum Ausbilden von Wellenprofilabschnitten. Ferner dient der zumindest eine Backeneinsatz dem Ausbilden der zwei spiegelbildlich zueinander angeordneten Steckverbinderprofilabschnitte. Diese beiden Steckverbinderprofilabschnitte werden nachfolgend voneinander getrennt. Das Endlosrohr kann somit mehrere Abschnitte mit Wellrohrprofil und mehrere Abschnitte mit den jeweils zwei spiegelbildlich zueinander angeordneten Steckverbinderprofilen oder zumindest einem Steckverbinderprofilabschnitt umfassen.

Nach dem Extrudieren eines derart ausgebildeten Endlosrohres wird dieses entformt und in zumindest zwei fluidische Einheiten mit zumindest einem endseitig angeordneten Steckverbinderprofilabschnitt und zumindest einem Wellrohrprofilabschnitt getrennt, wobei im Bereich zwischen den beiden spiegelbildlich zueinander ausgebildeten Steckverbinderprofilabschnitten die Trennung erfolgt.

Ebenfalls ist es möglich, Anzahl und Position der jeweiligen Steckverbinderprofilabschnitte entlang dem Endlosrohr anwendungsspezifisch zu variieren, so dass unterschiedlich lange fluidische Einheiten erzeugt werden können. Zu diesem Zweck können in vorgebbaren Abständen, die jeweils unterschiedlich sein können, Backeneinsätze zum Erzeugen des zumindest einen oder von zwei spiegelbildlich zueinander angeordneten Steckverbinderprofilabschnitten benachbart zu Profileinsätzen zum Formgeben von Wellenprofilabschnitten in der Extrusionsvorrichtung vorgesehen sein.

Die Backeneinsätze mit einer den Steckverbinderprofilabschnitten entsprechenden Innenprofilierung sind vorteilhaft zumindest zweiteilig ausgebildet und radial voneinander trennbar, um problemlos ein Entformen des erzeugten Endlosrohres entlang seiner Längserstreckung bzw. entlang seiner Länge zu ermöglichen. Dementsprechend können zwei Teile eines Backeneinsatzes über den Umfang des zu erzeugenden Endlosrohres bzw. Steckverbinderprofilabschnitts hinweg vorgesehen sein oder auch mehr als zwei Teile eines Backeneinsatzes. Beispielsweise können im Winkel von 180° zwei Teile eines Backeneinsatzes oder im Winkel von 120° drei Teile bzw. Segmente eines Backeneinsatzes oder im Winkel von jeweils 90° vier Teile oder Segmentes eines Backeneinsatzes vorgesehen sein. Ebenfalls ist es möglich, eine ungleichmäßige Verteilung von Teilen oder Segmenten eines Backeneinsatzes über den Umfang des zu erzeugenden bzw. der zu erzeugenden Steckverbinderprofilabschnitte(s) hinweg vorzusehen. Entsprechendes gilt für die Profileinsätze zum Erzeugen des oder der Wellenprofilabschnitte der fluidischen Einheit bzw. zuvor des zu formenden Endlosrohres.

Um ein problemloses Entformen in Öffnungsrichtung der Extrusionsvorrichtung bzw. des Corrugators vorsehen zu können, erweist es sich als vorteilhaft, den zumindest einen Steckverbinderprofilabschnitt frei von Hinterschnitten bezogen auf die Öffnungsrichtung auszubilden. Wenn das Profil bzw. die Geometrie des Steckverbinderprofilabschnitts keinen Hinterschnitt aufweist, ist ein problemloses Entformen in Öffnungsrichtung der Extrusionsvorrichtung möglich.

Der zumindest eine Steckerverbinderprofilabschnitt weist zumindest einen Aufnahmeabschnitt zum Anordnen eines Halteelements auf. Der Steckverbinderprofilabschnitt weist ferner zumindest eine Nut zum Anordnen eines Dichtelements, insbesondere eines O-Rings, auf. Der Aufnahmeabschnitt zum Anordnen eines Halteelements weist einen gegenüber seinen beidseitig benachbarten Abschnitten reduzierten Außendurchmesser auf. Der Aufnahmeabschnitt kann außenseitig durchgängig gleichmäßig glatt ausgebildet werden. Ebenfalls ist es möglich, in Abständen insbesondere ringförmige Erhebungen vorzusehen, wie eine Art Riffelung, um einen besseren Halt des Halteelements auf der Außenseite des Aufnahmeabschnitts zu ermöglichen. Durch das Reduzieren des Außendurchmessers im Bereich des Aufnahmeabschnitts können Haltearme des Halteelements dort eingreifen und sich in dem Aufnahmeabschnitt abstützen.

Ferner ist es möglich, dass der Aufnahmeabschnitt zum Anordnen eines Halteelements zumindest eine eine Verdrehsicherung ermöglichende Einrichtung aufweist. Beispielsweise kann der Aufnahmeabschnitt einen unregelmäßig geformten und/oder abgeflachten und/oder mehreckigen Bereich aufweisen, der als Verdrehsicherungseinrichtung dient. Insbesondere eignet sich hier ein mehreckiges oder zumindest einseitig abgeflachtes Ausbilden zumindest eines Bereichs des Aufnahmeabschnitts. Das Halteelement ist auf seiner Innenseite vorteilhaft mit einer entsprechend geformten, also insbesondere abgeflachten oder mehreckigen, Formgebung versehen, so dass Flächen auf der Innenseite des Halteelements auf entsprechende außenseitigen Flächen des Aufnahmeabschnitts, also insbesondere einem mehreckigen oder abgeflachten Bereich von diesem, aufliegen können. Hierdurch kann die gewünschte Verdrehsicherung geschaffen werden.

Ferner ist es möglich, dass der Aufnahmeabschnitt zum Anordnen eines Halteelements mit zumindest einer mit dem Halteelement zusammenwirkenden Druckverriegelungseinrichtung versehen werden kann oder ist, die ein Entriegeln des Haltelements bei im Inneren der fluidischen Einheit anliegendem Druck verhindert. Eine solche Druckverriegelungseinrichtung kann beispielsweise zumindest ein von der Außenseite des Aufnahmeabschnitts des Steckverbinderprofilabschnitts vorkragendes Element umfassen. Beispielsweise kann dieses stiftförmig oder als vorkragendes Element, wie eine punktförmige Erhebung, ausgebildet sein. Weiter vorteilhaft umfasst das Haltelement in diesem Falle zumindest eine Öffnung, die insbesondere in zumindest einem der Haltearme des Halteelements angeordnet ist. Ist der Steckverbinderprofilabschnitt beispielsweise als Steckerteilprofilabschnitt ausgebildet und in einen Muffenteil eingesteckt, ist es besonders dann, wenn im Inneren der fluidischen Einheit beispielsweise durch dort hindurchströmendes, unter Druck stehendes Medium ein Druck anliegt, wichtig, den Steckerteilprofilabschnitt der fluidischen Einheit und ein Muffenteil einer anderen Medienleitung oder eines Aggregats sicher aneinander festzuhalten. Ist das Halteelement auf den Aufnahmeabschnitt des Steckerteilprofilelements aufgesteckt, wird das Haltelement vorteilhaft bei im Inneren der fluidischen Einheit anliegendem Mediendruck über die Druckverriegelungseinrichtung, insbesondere die ein oder mehreren am Aufnahmeabschnitt außenseitig vorkragenden Elemente, verriegelt und festgehalten. Durch Druckbeaufschlagen der fluidischen Einheit wird eine axiale Relativbewegung zwischen Halteelement und Steckerteilprofilabschnitt hervorgerufen. Hierbei bewegt sich der Steckerteilprofilabschnitt bzw. die fluidische Einheit axial in Gegensteckrichtung, also entgegen der Steckrichtung des Steckerteilprofilabschnitts aus dem Muffenteil heraus, während das Halteelement z.B. axial unverschieblich im Muffenteil fixiert ist. Zur Druckverriegelung liegt das vorkragende Element auf der Außenseite des Aufnahmeabschnitts des Steckerteilprofilabschnitts aufgrund des Verschiebens des Haltelements gegenüber dem Steckerteilprofilelement in Axialrichtung der fluidischen Einheit außerhalb der entsprechenden Öffnung in dem Halteelement. Hierdurch kann ein radiales Bewegen des oder der Haltearme des Halteelements blockiert werden. Es ist somit vorteilhaft ein axiales Spiel des Halteelements auf dem Aufnahmeabschnitt des Steckerteilprofilabschnitts vorgesehen, so dass das vorkragende Element auf dem Aufnahmeabschnitt ausreichend weit von der zum Eintauchen des zumindest einen vorkragenden Elements dienenden Öffnung im Halteelement entfernt ist. Die Haltearme des Halteelements befinden sich nicht in einer Löseposition, wenn sich das zumindest eine vorkragende Element auf der Außenseite des Aufnahmeabschnitts des Steckerteils außerhalb der Öffnung im Haltelement befindet. Durch die Axialverschiebung zwischen der fluidischen Einheit und dem Halteelement werden die vorkragenden Elemente auf der Außenseite des Aufnahmeabschnitts des Steckerteils aus dem Bereich der Öffnung oder der Öffnungen im Halteelement heraus verschoben und sperren somit die Haltearme des Halteelements radial.

Die fluidische Einheit besteht vorteilhaft aus einem extrudierbaren Material, wie beispielsweise zumindest einem Polymermaterial. Insbesondere kann diese aus Polyamid, wie beispielsweise PA12, oder Polypropylen bestehen. Diese Materialien ermöglichen einerseits eine ausreichende Stabilität des zumindest einen Wellrohrprofilabschnitts, anderseits eine ausreichende Stabilität des zumindest einen Steckverbinderprofilabschnitts. Die fluidische Einheit eignet sich insbesondere für eine Anwendung im Thermomanagement eines Fahrzeugs, wie beispielsweise im Bereich von Modulen zur Batteriekühlung einer Fahrzeugbatterie. Der zumindest eine Steckverbinderprofilabschnitt ist hierbei insbesondere als Steckerteilprofilabschnitt ausgebildet und mit dem Halteelement versehen, so dass eine fluidische Verbindung mit Zu- und Abläufen, also Einlaufstutzen und Auslaufstutzen, an Modulen zur Batteriekühlung, wie beispielsweise Batteriekühlplatten, durch Steckverbinden von Steckerteilprofilabschnitt und den entsprechend als Muffenteil ausgebildeten Einlaufstutzen und Auslaufstutzen vorgesehen werden kann. Die an zumindest einem Ende mit dem Steckverbinderprofilabschnitt versehene fluidische Einheit wird vorteilhaft zunächst mit dem Halteelement versehen und nachfolgend mit dem zumindest einen Dichtelement, beispielsweise einem O-Ring. Anschließend kann direkt ein Steckverbinden beispielsweise mit einem Muffenteil, wie einem Einlaufstutzen oder einem Auslaufstutzen an einem Modul zur Batteriekühlung einer Fahrzeugbatterie erfolgen. Somit ist auch eine einfache, in wenigen Schritten durchführbare Montage zahlreicher fluidischer Einheiten an mit einer Vielzahl von mit Zu- und Abläufen versehenen Modulen zur Batteriekühlung in einem Fahrzeug problemlos möglich.

Zur näheren Erläuterung der Erfindung werden im Folgenden Ausführungsbeispiele von dieser näher anhand der Zeichnungen beschrieben. Diese zeigen in:
Figur 1 eine perspektivische Ansicht eines Detailausschnitts eines erfindungsgemäßen Endlosrohres mit zwei Wellrohrprofilabschnitten und zwei spiegelbildlich zueinander ausgebildeten Steckverbinderprofilabschnitten, zum Ausbilden von erfindungsgemäßen fluidischen Einheiten,
Figur 2 eine perspektivische Ansicht einer erfindungsgemäßen fluidischen Einheit mit einem Wellrohrprofilabschnitt und einem einteilig dran endseitig angeformten Steckverbinderprofilabschnitt in Form eines Steckerteilprofilabschnitts,
Figur 3 eine perspektivische Ansicht zweier erfindungsgemäßer fluidischer Einheiten mit jeweils zwei endseitig angeordneten Steckverbinderprofilabschnitten, von denen zwei spiegelbildlich zueinander ausgebildet und noch nicht voneinander getrennt sind, und zwei Wellrohrprofilabschnitten,
Figur 4 eine Querschnittsansicht durch einen erfindungsgemäßen Backeneinsatz einer erfindungsgemäßen Extrusionsvorrichtung zum Herstellen einer erfindungsgemäßen fluidischen Einheit, wobei der Backeneinsatz zum Formgeben zumindest eines Steckverbinderprofilabschnitts dient,
Figur 5 bis 7 drei Montageschritte zum Montieren eines Halteelements und eines Dichtrings auf der fluidischen Einheit gemäß Figur 2,
Figur 8 eine Längsschnittansicht durch eine weitere Ausführungsform einer mit Halteelement und Dichtring versehenen erfindungsgemäßen fluidischen Einheit, und
Figur 9 eine skizzenhafte Längsschnittansicht durch eine erfindungsgemäße Extrusionsvorrichtung zum Herstellen einer erfindungsgemäßen fluidischen Einheit.

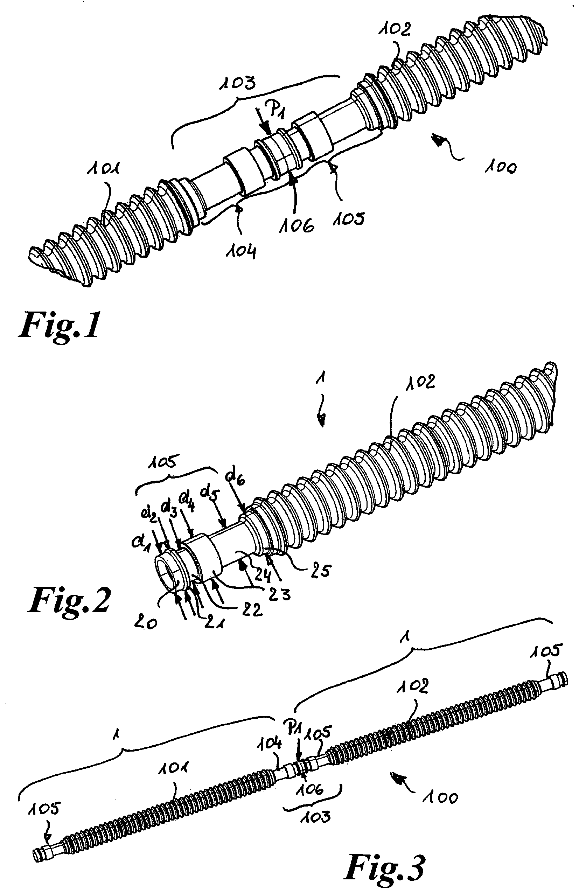

In Figur 1 ist eine perspektivische Ansicht eines Detailausschnitts eines Endlosrohres 100 mit zwei Wellrohrprofilabschnitten 101, 102 und einem zwischen diesen angeordneten Abschnitt 103 und zwei spiegelbildlich zueinander ausgebildeten, aneinanderhängenden Steckverbinderprofilabschnitten 104, 105 gezeigt. Die beiden Steckverbinderprofilabschnitte 104, 105 gehen ineinander über. Sie weisen die Formgebung von Steckerteilprofilabschnitten auf. Das Endlosrohr mit seinen Wellrohrprofilabschnitten 101, 102 und den beiden Steckverbinderprofilabschnitten 104, 105 ist als ein Teil, also einteilig, ausgebildet.

Zum Erzeugen mehrerer fluidischer Einheiten 1 wird das Endlosrohr 100 in den jeweiligen Abschnitten 103 jeweils zwischen zwei Steckverbinderprofilabschnitten 104, 105 getrennt. Dies ist durch einen Pfeil P1, der auf eine Trennstelle 106 weist, in Figur 1 angedeutet. Figur 2 zeigt die sich danach ergebende fluidische Einheit 1 mit dem Wellrohrprofilabschnitt 102 sowie dem endseitig einteilig daran angeformten Steckverbinderprofilabschnitt 105. Dieser ist in der Ausgestaltung nach Figur 2 als Steckerteilprofilabschnitt ausgebildet. Der Steckerteilprofilabschnitt 105 weist einen endseitigen Abschnitt 20 mit einem Außendurchmesser d₁, einen sich daran anschließenden, gegenüber dem endseitigen Abschnitt 20 leicht auskragenden Wulstabschnitt 21 mit einem Außendurchmesser d₂, im Anschluss an diesen einen Nutabschnitt 22 auf, dessen Außendurchmesser d₃ deutlich geringer als der Außendurchmesser d₂ des Wulstabschnitts 21 und auch als der Außendurchmesser d₁ des endseitigen Abschnitts 20 ist. Benachbart zu dem Nutabschnitt 22 weist der Steckerteilprofilabschnitt 105 einen Abschnitt 23 auf, der einen Außendurchmesser d₄ aufweist, der etwa dem Außendurchmesser d₂ des Wulstabschnitts 21 entspricht, und einen Aufnahmeabschnitt 24 mit einem Außendurchmesser d₅, der etwa dem Außendurchmesser d₃ des Nutabschnitts 22 entspricht. Benachbart zu dem Aufnahmeabschnitt 24 ist ein Übergangsabschnitt 25 vorgesehen, an den sich der Wellrohrprofilabschnitt 102 anschließt. Der Übergangsabschnitt 25 weist einen Außendurchmesser d₆ auf, der etwa dem Außendurchmesser d₄ bzw. d₂ des Abschnitt 23 und des Wulstabschnitts 21 entspricht.

In Figur 3 sind zwei fluidische Einheiten 1 mit jeweils endseitigen Steckerteilprofilabschnitten 104 bzw. 105 und dem noch nicht in zwei Steckerteilprofilabschnitte 2 getrennten Abschnitt 103 gezeigt. Anstelle eines Endlosrohres 100 mit einer beliebigen Anzahl von Wellrohrprofilabschnitten 101, 102 mit dazwischen angeordneten Steckverbinderprofilabschnitten bzw. an beiden Enden des Endlosrohres 100 ausgebildeten Steckverbinderprofilabschnitten 104 bzw. 105 können auch lediglich ein oder zwei Wellrohrprofilabschnitte mit endseitig einteilig daran angeformten Steckerteilprofilabschnitten vorgesehen werden. Die Länge der jeweiligen Wellrohrprofilabschnitte 101 bzw. 102 und auch der dazwischen angeordneten Steckverbinderprofilabschnitte 104, 105 kann anwendungsspezifisch variiert werden. Insbesondere ist es möglich, die Wellrohrprofilabschnitte 101 und 102 unterschiedlich lang auszubilden, um unterschiedlich lange fluidische Einheiten 1 zu erzeugen, die jeweils zumindest an einem Ende mit dem Steckverbinderprofilabschnitt 104 bzw. 105 versehen sind. Das andere Ende des Wellrohrprofilabschnitts 101 bzw. 102 kann auch ohne Steckverbinderprofilabschnitt ausgebildet werden, so dass an einem solchen Ende beispielsweise ein separat gefertigter Steckverbinder, beispielsweise in Form eines separat gefertigten Muffenteils aufgedornt, angeschweißt oder anderweitig befestigt werden kann.

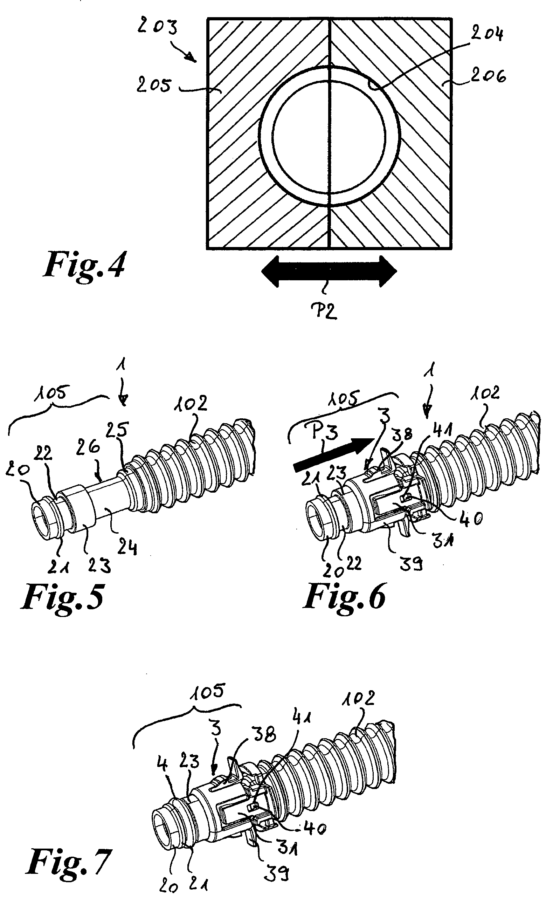

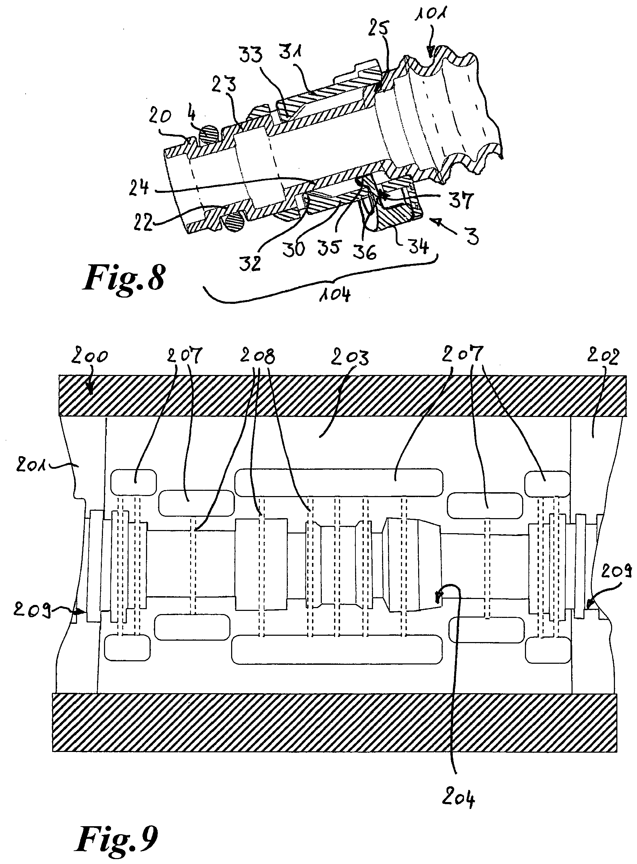

Zum Herstellen eines solchen Endlosrohres 100 dient eine Extrusionsvorrichtung 200, die auch als Corrugator bezeichnet wird. Von einer solchen Extrusionsvorrichtung 200 ist in Figur 9 ein Ausschnitt gezeigt. Dort sind zwei Profileinsätze 201, 202 mit einem dazwischen angeordneten Backeneinsatz 203 gezeigt. Die beiden Profileinsätze 201, 202 dienen dem Formgeben des Wellenprofils der Wellrohrprofilabschnitte 101, 102, während der Backeneinsatz 203 bezüglich seiner Innenprofilierung 204 dem Außenprofil der Steckverbinderprofilabschnitte 104, 105 entspricht. Gemäß dem in Figur 4 gezeigten Ausführungsbeispiel können in Umfangsrichtung des zu erzeugenden Endlosrohres 100 zwei Teile oder Segmente 205, 206 des Backeneinsatzes 203 und entsprechend jeweils auch zwei Teile oder Segmente des ersten Profileinsatzes 201 und zwei Teile oder Segmente des zweiten Profileinsatzes 202 vorgesehen sein, um nach dem Extrudieren des Endlosrohres 100 dieses mühelos entformen zu können. Der zweiteilige Backeneinsatz 203 ist in Figur 4 zu sehen, wobei die Öffnungseinrichtung zum Entfernen durch den Doppelpfeil P2 angedeutet ist. Der Längsschnitt durch die beiden Teile 205, 206 des Backeneinsatzes 203 in Figur 4 liegt in Höhe der Profilierung zum Ausbilden eines der beiden Nutabschnitte 22 des späteren Steckverbinderprofilabschnitts 104 bzw. 105. Zum Unterstützen des Anschmiegens bzw. Anlegens der insbesondere extrudierten Kunststoffmaterials an der Innenseite des Backeneinsatzes 203 bzw. dessen Innenprofilierung 204 und auch der Profileinsätze 201, 202 und deren Innenprofilierung 209 dient auf dieses wirkender Unterdruck, der in Richtung der Innenseite des Backeneinsatzes 203 bzw. der Profileinsätze 201, 202 wirkt. Über Saugöffnungen 207 und im Bereich der Innenprofilierung 204 angeordnete Nuten 208 wird das Kunststoffmaterial in die Innenprofilierung gesogen.

Wie Figur 9 weiter zu entnehmen ist, kann der Backeneinsatz 203 problemlos in eine Corrugatorkette, also zwischen jeweils zwei Profileinsätze 201, 202 zum Ausbilden von Wellrohrprofilabschnitten 101, 102 zwischengefügt werden. Somit ist ein problemloses Integrieren von Backeneinsätzen 203 in eine Extrusionsvorrichtung, wie die Extrusionsvorrichtung 200, zum Ausbilden von Endlosrohren 100 und, nachfolgend, fluidischen Einheiten 1 möglich.

Auf den oder die endseitig am jeweiligen Wellrohrprofilabschnitt 101,102 angeordneten Steckverbinderprofilabschnitt(e) bzw. Steckerteilprofilabschnitt(e) 104, 105 können, wie in dem Ablauf der Montageschritte in Figur 5 bis Figur 7 gezeigt, ein Halteelement 3 und ein Dichtring, hier in Form eines O-Rings 4, aufgefügt werden. Die Richtung des Aufschiebens des Halteelements 3 und des O-Rings 4 ist in Figur 6 durch einen Pfeil P3 angedeutet. Das Halteelement 3 und nachfolgend der O-Ring 4 werden in Richtung des Pfeils P3 auf das Ende des Steckerteilprofilelements aufgeschoben, also zunächst dessen endseitigen Abschnitt 20, danach den Wulstabschnitt 21 zur Positionierung im Nutabschnitt 22 hinweg geschoben. Das Halteelement 3 ist nach der Montage auf dem Steckerteilprofilabschnitt 105 im Wesentlichen auf dessen Aufnahmeabschnitt 24 positioniert. Dies kann auch Figur 8 entnommen werden. Endseitig stützt sich das Haltelement 3 einerseits auf dem Abschnitt 23, andererseits auf dem Übergangsabschnitt 25 des Steckerteilprofilabschnitts 105 ab.

Wie insbesondere Figur 8 entnommen werden kann, die eine fluidische Einheit 1 mit Steckerteilprofilabschnitt 104 endseitig einteilig angeordnet an dem Wellenprofilabschnitt 101 zeigt, lagern zwei Haltearme 30, 31 des Halteelements 3 im Aufnahmeabschnitt 24 des Steckerteilprofilabschnitts 104, stützen sich auf dessen Außenseite 26 mit ihren jeweiligen Rastnasen 32, 33 ab. Ferner ist in Figur 8 ein radial steckbares Verriegelungselement 34 des Halteelements 3 erkennbar, das mit einer endseitigen Rastnase 35 eines Sperrelements 36 den Haltearm 30 untergreift und damit gegen ein radiales Bewegen sperrt bzw. verriegelt. Das Sperrelement 36 durchgreift eine Durchgangsöffnung 37 in Form eines kleinen Fensters im Haltearm 30. In der in die Durchgangsöffnung 37 eingefügten Position hält sich die Rastnase 35 an dem die Durchgangsöffnung 37 umgrenzenden Rand des Haltearms 30 fest und sichert das Sperrelement 36 und somit das radial steckbare Verriegelungselement 34 gegen ein ungewolltes Lösen aus der Verriegelungsposition. In dieser Verriegelungsposition können auch weitere Haltearme 38, 39 des Halteelements 3, wie sie beispielsweise in den Figuren 6 und 7 zu sehen sind, gegen ein radiales Bewegen in Richtung des Steckerteilprofilelements 104 gehindert werden, da das radial steckbare Verriegelungselement 34 diese Haltearme 38, 39 mit in Figur 8 und auch den Figuren 6 und 7 nicht gezeigten Sperrabschnitten hintergreifen kann.

Wie den Figuren 6 und 7 zu entnehmen ist, weist der dort gezeigte Aufnahmeabschnitt 24 eine mit dem Halteelement 3 zusammenwirkende Druckverriegelungseinrichtung in Form eines vorkragenden Elements 40 auf. Hierdurch kann ein Entriegeln des Haltelements 3 bei im Inneren der fluidischen Einheit 1 anliegendem Druck sicher verhindert werden. Das vorkragende Element 40 ragt in eine Durchgangsöffnung 41 in dem Haltearm 31 hinein bzw. durch diese hindurch. Durch Druckbeaufschlagen der fludischen Einheit 1 wird eine axiale Relativbewegung zwischen Halteelement 3 und Steckerteilprofilabschnitt 104 hervorgerufen. Hierbei bewegt sich der Steckerteilprofilabschnitt 104 bzw. die fluidische Einheit 1 axial in Gegensteckrichtung, also entgegen der Steckrichtung aus einem in Figur 8 nicht gezeigten Muffenteil heraus, während das Halteelement 3 z.B. axial unverschieblich im Muffenteil fixiert ist. Zur Druckverriegelung liegt das vorkragende Element 40 auf der Außenseite 26 des Aufnahmeabschnitts 24 des Steckerteilprofilabschnitts 104, aufgrund des Verschiebens des Haltelements 3 gegenüber dem Steckerteilprofilelement 104 in Axialrichtung der fluidischen Einheit 1, dann außerhalb der Durchgangsöffnung 41. Hierdurch kann ein radiales Bewegen des Halteelements 3 einer unter Mediendruck stehenden fluidischen Einheit 1 zu Sicherheitszwecken blockiert werden.

Das Endlosrohr 100 und entsprechend die daraus gefertigten fluidischen Einheiten 1 mit Wellrohrprofilabschnitt 101 bzw. 102 und zumindest einem endseitig daran angeordneten Steckerteilprofilabschnitt 104 bzw. 105 bestehen beispielsweise aus einem Polymermaterial, wie Polyamid, zum Beispiel PA12, oder Polypropylen. Grundsätzlich können auch andere Polymermaterialien, insbesondere auch unterschiedliche Polymermaterialien, zum Herstellen eines Endlosrohres 100 verwendet werden.

Neben den im Vorstehenden beschriebenen und in den Figuren gezeigten Ausführungsvarianten von fluidischen Einheiten und Verfahren zu deren Herstellung können noch zahlreiche weitere vorgesehen werden, insbesondere auch beliebige Kombinationen der vorstehend genannten Merkmale, wobei jeweils Wellrohr und Steckverbinder einteilig miteinander ausgebildet sind und die fluidische Einheit bzw. auch das Endlosrohr, aus dem zumindest eine fluidische Einheit herausgetrennt bzw. gebildet wird, zumindest einen Wellrohrprofilabschnitt und zumindest einen Steckverbinderprofilabschnitt, insbesondere Steckerteilprofilabschnitt, aufweist.

### Bezugszeichenliste

- 1: Fluidische Einheit
- 3: Halteelement
- 4: O-Ring
- 20: endseitiger Abschnitt
- 21: Wulstabschnitt
- 22: Nutabschnitt
- 23: Abschnitt
- 24: Aufnahmeabschnitt
- 25: Übergangsabschnitt
- 26: Außenseite von 24
- 30: Haltearm
- 31: Haltearm
- 32: Rastnase
- 33: Rastnase
- 34: radial steckbares Verriegelungselement
- 35: Rastnase
- 36: Sperrelement
- 37: Durchgangsöffnung
- 38: Haltearm
- 39: Haltearm
- 40: vorkragendes Element
- 41: Durchgangsöffnung
- 100: Endlosrohr
- 101: Wellrohrprofilabschnitt
- 102: Wellrohrprofilabschnitt
- 103: Abschnitt
- 104: Steckverbinderprofilabschnitt/Steckerteilprofilabschnitt
- 105: Steckverbinderprofilabschnitt/Steckerteilprofilabschnitt
- 106: Trennstelle
- 200: Extrusionsvorrichtung
- 201: erster Profileinsatz
- 202: zweiter Profileinsatz
- 203: Backeneinsatz
- 204: Innenprofilierung
- 205: erster Teil von 203
- 206: zweiter Teil von 203
- 207: Saugöffnung
- 208: Nut
- 209: Innenprofilierung
- d₁: Außendurchmesser von 20
- d₂: Außendurchmesser von 21
- d₃: Außendurchmesser von 22
- d₄: Außendurchmesser von 23
- d₅: Außendurchmesser von 24
- d₆: Außendurchmesser von 25
- P1: Pfeil
- P2: Doppelpfeil
- P3: Pfeil

## Patentansprüche

1. Fluidische Einheit (1), umfassend zumindest einen Steckverbinder und zumindest ein Wellrohr, wobei der zumindest eine Steckverbinder einteilig mit dem zumindest einen Wellrohr ausgebildet ist und die fluidische Einheit (1) zumindest einen Wellrohrprofilabschnitt (101,102) und zumindest einen einteilig daran angeformten Steckverbinderprofilabschnitt (104,105) aufweist,
wobei die fluidische Einheit ein Halteelement (3) und einen Dichtring (4) aufweist, wobei der zumindest eine Steckverbinderprofilabschnitt (104,105) ein Steckerteilprofilabschnitt ist und zumindest einen Aufnahmeabschnitt (24) zum Anordnen des Halteelements (3) und zumindest einen Nutabschnitt (22) zum Anordnen des Dichtelements (4) aufweist,
und benachbart zu dem Aufnahmeabschnitt (24) ein Übergangsabschnitt (25) vorgesehen ist, an den sich der Wellrohrprofilabschnitt (102) anschließt,
wobei Wellrohr und Steckverbinder in Form des Steckerteilprofilabschnitts einteilig durch Extrudieren in einer Extrusionsvorrichtung ausgebildet sind, das Halteelement (3) und der Dichtring (4) auf den endseitig an dem zumindest einen Wellrohrprofilabschnitt (101, 102) angeordneter Steckerteilprofilabschnitt aufgefügt sind,
der Steckerteilprofilabschnitt einen endseitigen Abschnitt (20) mit einem Außendurchmesser (d₁), einen sich daran anschließenden, gegenüber dem endseitigen Abschnitt (20) leicht auskragenden Wulstabschnitt (21) mit einem Außendurchmesser (d₂) und im Anschluss an diesen den Nutabschnitt (22) aufweist, dessen Außendurchmesser (d₃) deutlich geringer als der Außendurchmesser (d₂) des Wulstabschnitts (21) und der Außendurchmesser (d₁) des endseitigen Abschnitts (20) ist,
benachbart zu dem Nutabschnitt (22) der Steckerteilprofilabschnitt (105) einen weiteren Abschnitt (23) aufweist, der einen Außendurchmesser (d₄) aufweist,
der etwa dem Außendurchmesser (d₂) des Wulstabschnitts (21) entspricht, der Aufnahmeabschnitt (24) zum Anordnen des Halteelements (3) einen gegenüber seinen beidseitig benachbarten Abschnitten (23, 25) reduzierten Außendurchmesser (d₅) aufweist, so dass Haltearme (30, 31) des Halteelements (3) dort eingreifen und sich in dem Aufnahmeabschnitt (24) abstützen, wobei der Außendurchmesser (d₅) des Aufnahmeabschnitts (24) etwa dem Außendurchmesser (d₃) des Nutabschnitts (22) entspricht, und
sich das Haltelement (3) endseitig einerseits auf dem dem Aufnahmeabschnitt (24) benachbarten weiteren Abschnitt (23), andererseits auf dem dem Aufnahmeabschnitt (24) benachbarten Übergangsabschnitt (25) des Steckerteilprofilabschnitts (105) abstützt.

2. Fluidische Einheit (1) nach Anspruch 1,
**dadurch gekennzeichnet, dass**
der zumindest eine Steckverbinderprofilabschnitt (104, 105) frei von Hinterschnitten ist.

3. Fluidische Einheit (1) nach einem der vorstehenden Ansprüche,
**dadurch gekennzeichnet, dass**
die fluidische Einheit (1) aus einem Polymermaterial besteht, insbesondere aus Polyamid, insbesondere PA12, oder Polypropylen.

4. Fluidische Einheit (1) nach einem der vorstehenden Ansprüche,
**dadurch gekennzeichnet, dass**
das Dichtelement ein O-Ring (4) ist.

5. Fluidische Einheit (1) nach einem der Ansprüche 1 bis 4,
**dadurch gekennzeichnet, dass**
der Aufnahmeabschnitt (24) zum Anordnen eines Halteelements (3) zumindest eine Einrichtung aufweist, die eine Verdrehsicherung ermöglicht, insbesondere die Einrichtung ein unregelmäßig geformter und/oder abgeflachter und/oder mehreckiger Bereich des Aufnahmeabschnitts (24) ist.

6. Fluidische Einheit (1) nach einem der Ansprüche 1 bis 5,
**dadurch gekennzeichnet, dass**
der Aufnahmeabschnitt (24) zum Anordnen eines Halteelements (3) mit zumindest einer mit dem Halteelement (3) zusammenwirkenden Druckverriegelungseinrichtung versehbar oder versehen ist, die ein Entriegeln des Halteelements (3) bei im Innern der fluidischen Einheit (1) anliegendem Druck verhindert.

7. Fluidische Einheit (1) nach Anspruch 6,
**dadurch gekennzeichnet, dass**
die Druckverriegelungseinrichtung zumindest ein von der Außenseite (26) des Aufnahmeabschnitts (24) des Steckverbinderprofilabschnitts (104,105) vorkragendes Element umfasst.

8. Verfahren zum Herstellen einer fluidischen Einheit (1) nach einem der vorstehenden Ansprüche,
**dadurch gekennzeichnet, dass**
- ein Endlosrohr (100) durch Extrudieren geformt wird, das Abschnitte (101,102) mit Wellrohrprofil und zumindest einen Abschnitt (103) mit zwei spiegelbildlich zueinander ausgebildeten Steckverbinderprofilabschnitten (104,105) aufweist,
- dass das Endlosrohr (100) entformt wird, und
- dass das Endlosrohr (100) im Bereich des zumindest einen Abschnitts (103) mit den beiden spiegelbildlich zueinander ausgebildeten Steckverbinderprofilabschnitten (104,105) zwischen diesen in zumindest zwei fluidische Einheiten (1) mit jeweils zumindest einem Wellrohrprofilabschnitt (101,102) und zumindest einem endseitig einteilig daran angeformten Steckverbinderprofilabschnitt (104,105) getrennt wird.

## Claims

1. Fluidic unit (1), comprising at least one plug-type connector and at least one corrugated pipe, wherein the at least one plug-type connector is formed in one piece with the at least one corrugated pipe, and the fluidic unit (1) has at least one corrugated pipe profile portion (101, 102) and at least one plug-type connector profile portion (104, 105) moulded in one piece thereon,
wherein the fluidic unit has a retaining element (3) and a sealing ring (4),
wherein the at least one plug-type connector profile portion (104, 105) is a plug part profile portion and has at least one receiving portion (24) for arrangement of the retaining element (3) and at least one groove portion (22) for arrangement of the sealing element (4),
and adjacent to the receiving portion (24) there is provided a transition portion (25), which is followed by the corrugated pipe profile portion (102),
wherein the corrugated pipe and the plug-type connector in the form of the plug part profile portion are formed in one piece by extrusion in an extrusion apparatus, the retaining element (3) and the sealing ring (4) are joined to the plug part profile portion arranged at the end of the respective corrugated pipe profile portion (101, 102),
the plug part profile portion has a terminal portion (20) having an outside diameter (d₁), an adjoining bead portion (21) having an outside diameter (d₂), which projects slightly relative to the terminal portion (20), and, following the bead portion, the groove portion (22), the outside diameter (d₃) of which is significantly smaller than the outside diameter (d₂) of the bead portion (21) and the outside diameter (d₁) of the terminal portion (20),
adjacent to the groove portion (22) the plug part profile portion (105) has a further portion (23) which has an outside diameter (d₄) which corresponds approximately to the outside diameter (d₂) of the bead portion (21),
the receiving portion (24) for the arrangement of the retaining element (3) has an outside diameter (d₅) which is reduced compared to the portions (23, 25) adjacent thereto on both sides, so that retaining arms (30, 31) of the retaining element (3) engage there and are supported in the receiving portion (24), wherein the outside diameter (d₅) of the receiving portion (24) corresponds approximately to the outside diameter (d₃) of the groove portion (22), and
the retaining element (3) is supported at its ends on the one hand on the further portion (23) adjacent to the receiving portion (24) and on the other hand on the transition portion (25), adjacent to the receiving portion (24), of the plug part profile portion (105).

2. Fluidic unit (1) according to claim 1,
**characterised in that**
the at least one plug-type connector profile portion (104, 105) is free of undercuts.

3. Fluidic unit (1) according to any one of the preceding claims,
**characterised in that**
the fluidic unit (1) consists of a polymer material, in particular of polyamide, in particular PA12, or polypropylene.

4. Fluidic unit (1) according to any one of the preceding claims,
**characterised in that**
the sealing element is an O-ring (4).

5. Fluidic unit (1) according to any one of claims 1 to 4,
**characterised in that**
the receiving portion (24) for the arrangement of a retaining element (3) has at least one means which permits locking against rotation, in particular the means is an irregularly shaped and/or flattened and/or polygonal region of the receiving portion (24).

6. Fluidic unit (1) according to any one of claims 1 to 5,
**characterised in that**
the receiving portion (24) for the arrangement of a retaining element (3) can be provided or is provided with at least one pressure-locking device cooperating with the retaining element (3), which pressure-locking device prevents the retaining element (3) from being unlocked when pressure is acting in the interior of the fluidic unit (1).

7. Fluidic unit (1) according to claim 6,
**characterised in that**
the pressure-locking device comprises at least one element which projects from the outside (26) of the receiving portion (24) of the plug-type connector profile portion (104, 105).

8. Method for producing a fluidic unit (1) according to any one of the preceding claims,
**characterised in that**
- an endless pipe (100) is formed by extrusion, which endless pipe has portions (101, 102) having a corrugated pipe profile and at least one portion (103) having two plug-type connector profile portions (104, 105) which are formed as mirror images of one another,
- the endless pipe (100) is demoulded, and
- the endless pipe (100) is separated in the region of the at least one portion (103) having the two plug-type connector profile portions (104, 105) formed as mirror images of one another, between those portions, into at least two fluidic units (1) each having at least one corrugated pipe profile portion (101, 102) and at least one plug-type connector profile portion (104, 105) moulded in one piece thereon at the end, wherein the at least one plug-type connector profile portion (104, 105) is a plug part profile portion and has at least one receiving portion (24) for the arrangement of a retaining element (3) and at least one groove portion (22) for the arrangement of a sealing element (4), and adjacent to the receiving portion (24) there is provided a transition portion (25) which is followed by the corrugated pipe profile portion (102),
wherein the corrugated pipe and the plug-type connector in the form of the plug part profile portion are formed in one piece by extrusion in an extrusion apparatus,
a retaining element (3) and a sealing ring (4) are joined to the plug part profile portion arranged at the end of the respective corrugated pipe profile portion (101, 102),
the plug part profile portion has a terminal portion (20) having an outside diameter (d₁), an adjoining bead portion (21) having an outside diameter (d₂), which projects slightly relative to the terminal portion (20), and, following the bead portion, the groove portion (22), the outside diameter (d₃) of which is significantly smaller than the outside diameter (d₂) of the bead portion (21) and the outside diameter (d₁) of the terminal portion (20),
adjacent to the groove portion (22) the plug part profile portion (105) has a further portion (23) which has an outside diameter (d₄) which corresponds approximately to the outside diameter (d₂) of the bead portion (21),
the receiving portion (24) for the arrangement of the retaining element (3) has an outside diameter (d₅) which is reduced compared to the portions (23, 25) adjacent thereto on both sides, so that retaining arms (30, 31) of the retaining element (3) engage there and are supported in the receiving portion (24), wherein the outside diameter (d₅) of the receiving portion (24) corresponds approximately to the outside diameter (d₃) of the groove portion (22), and the retaining element (3) is supported at its ends on the one hand on the further portion (23) adjacent to the receiving portion (24) and on the other hand on the transition portion (25), adjacent to the receiving portion (24), of the plug part profile portion (105).

## Revendications

1. Unité fluidique (1), comprenant au moins un connecteur et au moins un tube ondulé, dans laquelle l'au moins un connecteur est réalisé d'une seule pièce avec l'au moins un tube ondulé, et l'unité fluidique (1) présente au moins une section profilée de tube ondulé (101, 102) et au moins une section profilée de connecteur (104, 105) formée d'une seule pièce sur celle-ci,
dans laquelle l'unité fluidique présente un élément de maintien (3) et une bague d'étanchéité (4),
dans laquelle l'au moins une section profilée de connecteur (104, 105) est une section profilée de partie de fiche et présente au moins une section de réception (24) destinée à agencer l'élément de maintien (3) et au moins une section de rainure (22) destinée à agencer l'élément d'étanchéité (4),
et, de manière adjacente à la section de réception (24), une section de transition (25) est prévue, à laquelle la section profilée de tube ondulé (102) se raccorde,
dans laquelle le tube ondulé et le connecteur sont réalisés sous la forme de la section profilée de partie de fiche d'une seule pièce par extrusion dans un dispositif d'extrusion,
l'élément de maintien (3) et la bague d'étanchéité (4) sont assemblés par emboîtement sur la section profilée de partie de fiche disposée côté extrémité sur la section profilée de tube ondulé (101, 102) respective,
la section profilée de partie de fiche présente une section côté extrémité (20) avec un diamètre extérieur (d₁), une section de bourrelet (21) s'y raccordant, légèrement en porte-à-faux par rapport à la section côté extrémité (20) avec un diamètre extérieur (d₂) et, dans le prolongement de celle-ci, la section de rainure (22), dont le diamètre extérieur (d₃) est nettement inférieur au diamètre extérieur (d₂) de la section de bourrelet (21) et au diamètre extérieur (d₁) de la section côté extrémité (20),
de manière adjacente à la section de rainure (22), la section profilée de partie de fiche (105) présente une autre section (23), qui présente un diamètre extérieur (d₄), qui correspond à peu près au diamètre extérieur (d₂) de la section de bourrelet (21),
la section de réception (24) destinée à agencer l'élément de maintien (3) présente un diamètre extérieur (d₅) réduit par rapport à ses sections adjacentes de part et d'autre (23, 25) de telle sorte que des bras de maintien (30, 31) de l'élément de maintien (3) viennent en prise ici et prennent appui dans la section de réception (24), dans laquelle le diamètre extérieur (d₅) de la section de réception (24) correspond à peu près au diamètre extérieur (d₃) de la section de rainure (22), et
l'élément de maintien (3) prend appui côté extrémité d'une part sur l'autre section (23) adjacente à la section de réception (24) et d'autre part sur la section de transition (25), adjacente à la section de réception (24), de la section profilée de partie de fiche (105).

2. Unité fluidique (1) selon la revendication 1,
**caractérisée en ce que**
l'au moins une section profilée de connecteur (104, 105) est dépourvue de contre-dépouilles.

3. Unité fluidique (1) selon l'une quelconque des revendications précédentes,
**caractérisée en ce que**
l'unité fluidique (1) est constituée d'un matériau de polymère, en particulier de polyamide, en particulier de PA12, ou de polypropylène.

4. Unité fluidique (1) selon l'une quelconque des revendications précédentes,
**caractérisée en ce que**
l'élément d'étanchéité est un joint torique (4).

5. Unité fluidique (1) selon l'une quelconque des revendications 1 à 4,
**caractérisée en ce que**
la section de réception (24) destinée à agencer un élément de maintien (3) présente au moins un dispositif, qui permet un blocage anti-rotation, en particulier le dispositif est une zone à forme irrégulière et/ou aplatie et/ou polygonale de la section de réception (24).

6. Unité fluidique (1) selon l'une quelconque des revendications 1 à 5,
**caractérisée en ce que**
la section de réception (24) destinée à agencer un élément de maintien (3) peut être pourvue ou est pourvue d'au moins un dispositif de verrouillage par pression coopérant avec l'élément de maintien (3), qui empêche un déverrouillage de l'élément de maintien (3) en cas de pression appliquée à l'intérieur de l'unité fluidique (1).

7. Unité fluidique (1) selon la revendication 6,
**caractérisée en ce que**
le dispositif de verrouillage par pression comprend au moins un élément faisant saillie depuis le côté extérieur (26) de la section de réception (24) de la section profilée de connecteur (104, 105).

8. Procédé de fabrication d'une unité fluidique (1) selon l'une quelconque des revendications précédentes,
**caractérisé en ce que**
- un tube sans fin (100) est formé par extrusion, qui présente des sections (101, 102) avec un profilé de tube ondulé et au moins une section (103) avec deux sections profilées de connecteur (104, 105) réalisées en symétrie par miroir l'une par rapport à l'autre,
- que le tube sans fin (100) est déformé, et
- que le tube sans fin (100) est divisé, dans la zone de l'au moins une section (103) avec les deux sections profilées de connecteur (104, 105) réalisées en symétrie par miroir lune par rapport à l'autre, entre celles-ci, en au moins deux unités fluidiques (1) avec respectivement au moins une section profilée de tube ondulé (101, 102) et au moins une section profilée de connecteur (104, 105) formée côté extrémité d'une seule pièce sur celle-ci, dans lequel l'au moins une section profilée de connecteur (104, 105) est une section profilée de partie de fiche et présente au moins une section de réception (24) destinée à agencer un élément de maintien (3) et au moins une section de rainure (22) destinée à agencer un élément d'étanchéité (4), et de manière adjacente à la section de réception (24), une section de transition (25) est prévue, à laquelle se raccorde la section profilée de tube ondulé (102),
dans lequel le tube ondulé et le connecteur sont réalisés sous la forme de la section profilée de partie de fiche d'une seule pièce par extrusion dans un dispositif d'extrusion,
un élément de maintien (3) et une bague d'étanchéité (4) sont assemblés par emboîtement sur la section profilée de partie de fiche disposée côté extrémité sur la section profilée de tube ondulé (101, 102) respective,
la section profilée de partie de fiche présente une section côté extrémité (20) avec un diamètre extérieur (d₁), une section côté de bourrelet (21) s'y raccordant, légèrement en porte-à-faux par rapport à la section côté extrémité (20) avec un diamètre extérieur (d₂) et, dans le prolongement de celle-ci, la section de rainure (22), dont le diamètre extérieur (d₃) est nettement inférieur au diamètre extérieur (d₂) de la section de bourrelet (21) et au diamètre extérieur (d₁) de la section côté extrémité (20),
de manière adjacente à la section de rainure (22), la section profilée de partie de fiche (105) présente une autre section (23), qui présente un diamètre extérieur (d₄), qui correspond à peu près au diamètre extérieur (d₂) de la section de bourrelet (21),
la section de réception (24) destinée à agencer l'élément de maintien (3) présente un diamètre extérieur (d₅) réduit par rapport à ses sections (23, 25) adjacentes de part et d'autre, si bien que des bras de maintien (30, 31) de l'élément de maintien (3) y viennent en prise et prennent appui dans la section de réception (24), dans lequel le diamètre extérieur (d₅) de la section de réception (24) correspond à peu près au diamètre extérieur (d₃) de la section de rainure (22), et
l'élément de maintien (3) prend appui côté extrémité d'une part sur l'autre section (23) adjacente à la section de réception (24), d'autre part sur la section de transition (25), adjacente à la section de réception (24), de la section profilée de partie de fiche (105).
